(19) Europäisches Patentamt
European Patent Office
Office européen des brevets

(11) **EP 2 306 000 A1**

(12) **EUROPEAN PATENT APPLICATION**

(43) Date of publication:
**06.04.2011 Bulletin 2011/14**

(51) Int Cl.:
*F03D 3/00* *(2006.01)*     *F03D 3/04* *(2006.01)*

(21) Application number: **10185266.3**

(22) Date of filing: **01.10.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.10.2009 BY 20091405**

(71) Applicants:
• **Klimov, Vyacheslav Stepanovich
  220044 Minsk (BY)**

• **Klimov, Oleg Vyacheslavovich
  3001 Elgava (LV)**

(72) Inventors:
• **Klimov, Vyacheslav Stepanovich
  220044 Minsk (BY)**
• **Klimov, Oleg Vyacheslavovich
  3001 Elgava (LV)**

(74) Representative: **Pistolesi, Roberto et al
Dragotti & Associati Srl
Via Marina 6
20121 Milano (IT)**

(54) **Rotor platform of aerodynamic force and method of aerodynamic force generation**

(57)     Rotor platform of aerodynamic force is meant for generating aerodynamic lift force in horizontal position and aerodynamic transverse force in vertical position, with further practical implementation as a robust power installation of transport vehicle facilities.

The principle of operation of the platform is based on the well-known Magnus effect - generation of transverse force acting on an object spinning in the ambient air flow. The basis of the construction is the unit of several coplanar rotors, wherein the rotors spinning is caused by the air flow force and the rotors provide the summed value of the generated aerodynamic force.

Fig. 1

**Description**

DESCRIPTION OF THE INVENTION

A rotor platform of aerodynamic force and a method of aerodynamic force generation relate to wind power engineering and are meant for generating lift and transverse aerodynamic forces.

It is known that aerodynamic force results from the interaction of physical objects with the ambient air flow (1, page 484).

An airplane wing is one of the simplest well-known physical objects generating in the ambient air flow an aerodynamic force in the form of a lift force (2, page 505).

A wing lift force is produced owing to its unsymmetrical form, with the air flow streaming around it to pass its curved upper surface at the velocity larger than the velocity of the air flow passing its flat bottom. Due to the difference in the velocities, as per Bernoulli equation, a lift force is produced, which value is derived via Kutta-Joukowski theorem as given below:

$$Y = \rho V \Gamma L = C_y \frac{\rho V^2}{2} S, \quad (3, \text{pages } 141\text{-}142)$$

$\Gamma$ - velocity circulation value;
$\rho$ - air density;
$V$ - windstream velocity;
$S$ - wing surface square in plain view;
$L$ - wing length;
$C_y$ - dimensionless coefficient dependant on the physical properties of air, the wing itself and the wing orientation against the air flow.

A lift force Y in symbolic expression as cited above, or as follows

$$A = \rho \Gamma V L,$$

as per (4, page 121) is also termed transverse and its value is proportional to the flow velocity squared and the value of coefficient $C_y$.

"The value Cy bears considerable importance as the larger it is the lesser are the take-off speed and landing speed of an airplane", i.e. the minimum air flow velocity generating the specified lift force depends directly on the value Cy. In a particularly preferred embodiment of the wing, the value Cy does not exceed the values 1, 2 (3, pages 141-142).

It is known that the cylinder rotating around the longitudinal axis "...under equal conditions creates a force 10 times larger that the wing does" (5, pages 55-57), i.e. the coefficient Cy gains the value n-order larger than that of the airplane wing.

The proposed invention is aimed at utilizing the potential of generating aerodynamic force by the cylindrical body rotating in air flow and creating hereon a simple and efficient technical device capable of generating powerful lift and transverse force suitable for practical implementation.

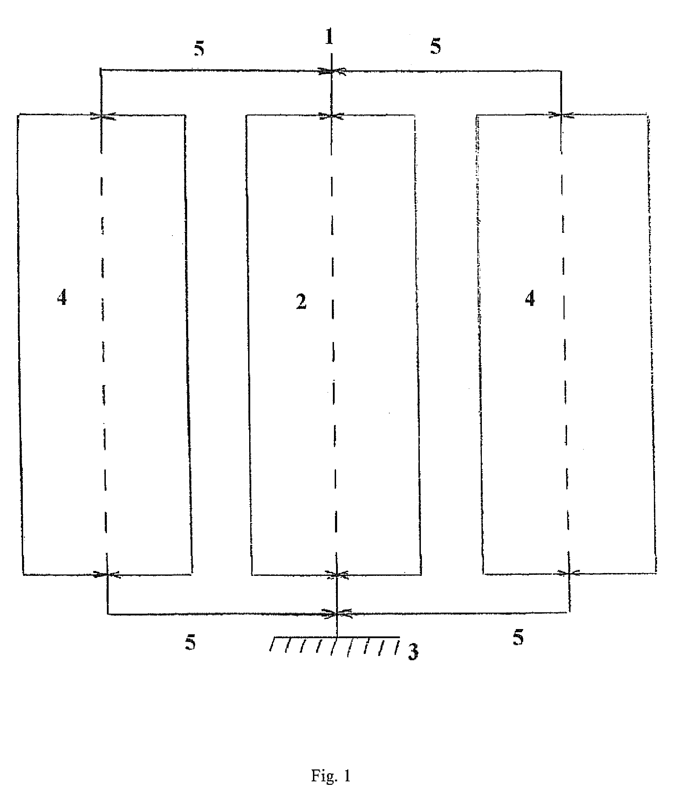

The schematic representation of the rotor platform of aerodynamic force is presented in Fig. 1. The basis of the construction is the rotor unit of identical symmetrical coplanar central and lateral rotors with load-bearing elements of logarithmic spiral profile, the prototype thereof being a marine rotary wind-powered propulsion - BY № 8234.

The rotation longitudinal axis 1 of the central rotor 2 is fixed in the platform frame 3, whereas the longitudinal axes of the lateral rotors 4 are rigidly tied by cross-members 5, with the centers of the cross-members via the bearing units coupled with the fixed rotation axis of the central rotor, which allows the firmly inter-tied lateral rotors to repeatedly take a symmetrical position in a single plane as per the central rotor.

It is also known that air flow flowing around the rotating body causes circulation of the air flow around its contour, the velocity thereof is summed up with the velocity of the flow when they are co-directional (4, pages 100-105), which imparts additional kinetic energy to the flow.

The essence of the invention consists in using the flow with additional velocity to act on the consecutive rotor.

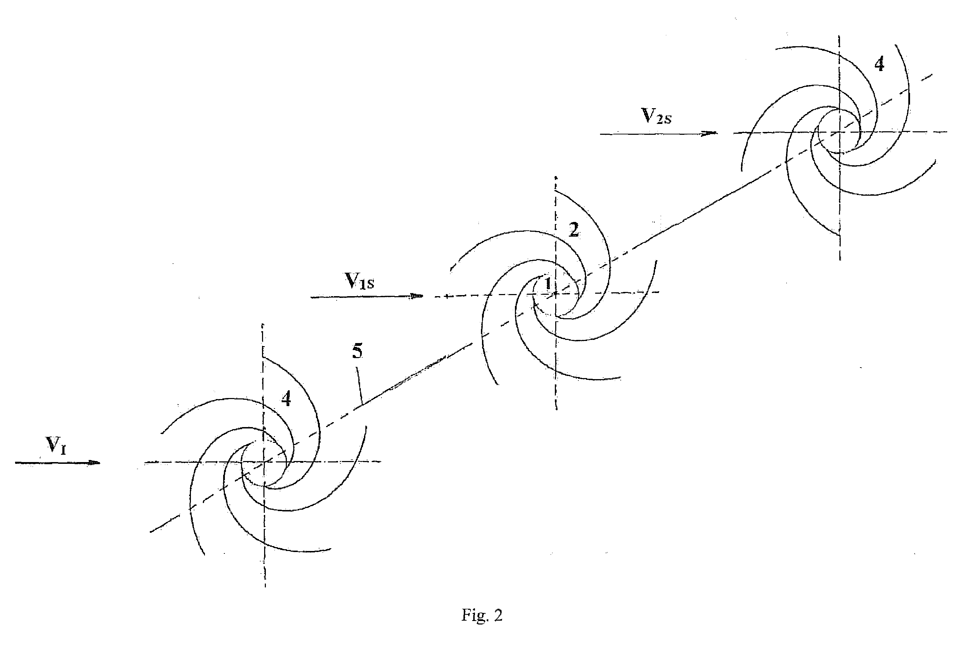

The method of generating aerodynamic force by the rotor platform, aerodynamic force being a sum of aerodynamic forces generated by each platform rotor, is shown in Fig. 2.

The air flow with initial velocity $V_l$ falls on the first rotor and sets it to rotation at the velocity $V_{1R}$. Summation of the rotation velocity and flow velocity results in the flow velocity that substantially exceeds its initial value

$$V_{1S} = V_I + V_{1R}.$$

The flow further falls on the consecutive rotor at the velocity $V_{1S}$, sets it to rotation at the velocity $V_{2R}$, summation of velocities results in the velocity $V_{2S}$ that renders its effect on the consequent rotor, whereby fully repeating the previous cycle.

Thus, the value of aerodynamic force generated by the rotor platform according to Kutta-Joukowski theorem is expressed as follows:

$$\sum Y = C_y \rho \left( \frac{V_I^2}{2} + \frac{V_{1S}^2}{2} + \frac{V_{2S}^2}{2} \right) S.$$

References:

1. The Great Soviet Encyclopedia, 3rd edition., vol. 2.
2. The Great Soviet Encyclopedia, 3rd edition., vol. 13.
3. The Great Soviet Encyclopedia, 3rd edition., vol. 20.
4. Prandtle L., Fluid Mechanics. M., 1951.
5. Merkoulov V.I. Hydrostatics, Known and Unknown, M.,1989
6. Patent BY No. 8234.

**Claims**

1. A rotor platform of aerodynamic force comprising identical central and lateral rotors with load-bearing elements of logarithmic spiral profile, **characterized in that** the rotation longitudinal axis of the central rotor is fixed in the platform frame, whereas the rotation longitudinal axes of the lateral rotors are rigidly tied by cross-members, with the centers of the latter ones, via bearing units, being coupled with the fixed longitudinal axis of the central rotor.

2. A method of generating aerodynamic force by the rotor platform according to claim 1, **characterized in that** the given aerodynamic force represents the sum of the forces generated in the nearest to the rotor air flow, due to the flow with natural velocity, whereas on each consequent rotor under the effect of the flow with the summed velocity generated on each preceding rotor due to the summation of the rotation velocity and the flow velocity, being mathematically expressed as follows:

$$\sum Y = C_y \rho \left( \frac{V_I^2}{2} + \frac{V_{1S}^2}{2} + \frac{V_{2S}^2}{2} \right) S.$$

Fig. 1

Fig. 2

**EUROPEAN SEARCH REPORT**

Application Number

EP 10 18 5266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 602 584 A (NORTH HENRY [CA] ET AL) 29 July 1986 (1986-07-29) * abstract; figure 4 * | 1,2 | INV. F03D3/00 F03D3/04 |
| T | US 4 398 895 A (ASKER GUNNAR C F [US]) 16 August 1983 (1983-08-16) * abstract; figures * | 1,2 | |
| A | DE 35 01 807 A1 (SCHNEIDER HERIBERT [DE]) 24 July 1986 (1986-07-24) * abstract * * page 4, lines 1-3 * * page 4, paragraph 7-8; figures 1,2 * | 1,2 | |
| A | DE 20 2008 002376 U1 (DECHANT ERICH [DE]) 17 April 2008 (2008-04-17) * abstract; figure 1 * | 1,2 | |
| A | EP 2 075 460 A2 (KLIMOV VYACHESLAV STEPANOVICH [BY]; KLIMOV OLEG VYACHESLAVOVICH [BY]) 1 July 2009 (2009-07-01) * paragraphs [0010], [0011]; figure 2 * | 1,2 | TECHNICAL FIELDS SEARCHED (IPC) F03D B63H |
| A | EP 2 075 459 A2 (KLIMOV VYACHESLAV STEPANOVICH [BY]; KLIMOV OLEG VYACHESLAVOVICH [BY]) 1 July 2009 (2009-07-01) * abstract; figure 2 * | 1,2 | |

The present search report has been drawn up for all claims

| Place of search | Date of completion of the search | Examiner |
|---|---|---|
| The Hague | 11 January 2011 | Criado Jimenez, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 10 18 5266

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2011

| Patent document cited in search report | | Publication date | Patent family member(s) | | Publication date |
|---|---|---|---|---|---|
| US 4602584 | A | 29-07-1986 | NONE | | |
| US 4398895 | A | 16-08-1983 | NONE | | |
| DE 3501807 | A1 | 24-07-1986 | NONE | | |
| DE 202008002376 | U1 | 17-04-2008 | NONE | | |
| EP 2075460 | A2 | 01-07-2009 | CA | 2647657 A1 | 26-06-2009 |
| | | | CN | 101532467 A | 16-09-2009 |
| | | | EA | 200900309 A2 | 30-10-2009 |
| | | | JP | 2009216082 A | 24-09-2009 |
| | | | KR | 20090071447 A | 01-07-2009 |
| | | | US | 2009167029 A1 | 02-07-2009 |
| EP 2075459 | A2 | 01-07-2009 | CA | 2647648 A1 | 29-06-2009 |
| | | | CN | 101469666 A | 01-07-2009 |
| | | | EA | 200900308 A2 | 30-10-2009 |
| | | | JP | 2009228670 A | 08-10-2009 |
| | | | KR | 20090073034 A | 02-07-2009 |
| | | | US | 2009169388 A1 | 02-07-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 8234 A

### Non-patent literature cited in the description

- The Great Soviet Encyclopedia. vol. 2
- The Great Soviet Encyclopedia. vol. 13
- The Great Soviet Encyclopedia. vol. 20
- **Prandtle L.** *Fluid Mechanics. M.,* 1951
- **Merkoulov V.I.** Hydrostatics. *Known and Unknown, M.,* 1989